# EUROPEAN PATENT APPLICATION

(11) **EP 4 376 135 A1**
(43) Date of publication of application: **29.05.2024**
(21) Application number: 22826788.6
(22) Date of filing: 04.11.2022
(51) Int. Cl.: H01M 10/00, H01M 6/00, H01M 10/04, H01M 50/533

(54) **COILED CELL STRUCTURE AND BATTERY**

(30) Priority: 13.10.2022 CN 202222696530 U
(71) Applicant: Eve Power Co., Ltd., Jingmen, Hubei 448000 (CN); Huizhou Eve Power Co., Ltd, Tonghu Town, Zhongkai High-tech District Huizhou, Guangdong 516039 (CN)
(72) Inventor: CHEN, Wen, Jingmen, Hubei 448000 (CN); LI, Shangyi, Jingmen, Hubei 448000 (CN); HUANG, Liming, Jingmen, Hubei 448000 (CN)
(74) Representative: Lermer, Christoph
(86) International application number: PCT/CN2022/130083
(87) International publication number: WO 2024/077686

(57) **Abstract**

The application discloses a coil structure, including a coil, both positive and negative tabs of the coil include a tab uncut area between the tab outer ring cut-out area and the tab center cut-out area, and along the axial direction of the coil, the tab uncut area protrudes from the tab outer ring cut-out area and the tab center cut-out area. After the above-mentioned cut-out area is cut by the cutting process, the problem that the edge of the tab is turned out after rubbing can be improved, and the avoidance space provided by the cutting process can also reduce the risk of tab deformation caused by the extrusion of the jellyroll with the case, and solve the problem that the welding needle or thimble cannot smoothly enter the center hole. Cutting off the negative electrode tab outer ring can also reserve a space for the installation of the negative current collection plate, which can prevent the negative current collection plate from sinking during the battery sealing process, resulting in an increase in the core pressing amount and avoiding short circuit. The application also discloses a battery including the above-mentioned coil structure.

## Description

This application claims the priority of China Patent Application No.202222696530.7 filed in China Patent Office on Oct. 13, 2022, the entire contents of which are incorporated into this application by reference.

### Technical Field

The application relates to the technical field of batteries, such as a coil structure and a battery.

### Background Art

With the continuous development of battery technology, it is an important research direction how to continuously improve the energy density of batteries on the premise of ensuring the safety of batteries. In order to improve the energy density of the battery, the space between the case and the coil of the battery is getting smaller and smaller. However, after the coil is flattened, the outer edge of the tab is prone to eversion, which makes the tab contact with the case easily, resulting in insufficient insulation reliability between the tab and the case. Secondly, the hole blocking effect is easy to exist in the center hole of the rolled core after kneading, so that the welding needle or thimble cannot smoothly enter the center hole of the wounding core. In addition, there is insufficient avoidance space at the tab side of the coil, and there may be some problems such as the deformation of the tab caused by the extrusion of the coil with the case when it enters the case.

### Summary of the invention

The application provides a coil structure, which can effectively avoid the extrusion between the coil and the case, ensure the safety of battery products and improve the assembly efficiency.

On the first aspect, the embodiment of the application provides a coil structure, which includes a coil, wherein the coil is provided with a positive electrode tab and a negative electrode tab, and the positive electrode tab and the negative electrode tab both include a tab outer ring cut-out area and a tab center cut-out area formed by cutting, and a tab uncut area is disposed between the tab outer ring cut-out area and the tab center cut-out area, and the tab uncut area protrudes from the tab outer ring cut-out area and the tab center cut-out area along the axial direction of the coil.

In one embodiment, the tab outer ring cut-out area includes a negative electrode outer ring cut-out area located on the negative electrode tab, which has an annular structure, and a width of the negative electrode outer ring cut-out area is denoted by H1 and 1mm < H1 < 10mm, and a height of the negative electrode outer ring cut-out area is denoted by H2 and 1mm < H2 < 10mm.

In one embodiment, the tab outer ring cut-out area includes a positive electrode outer ring cut-out area located on the positive electrode tab, which has an annular structure, and a width of the negative electrode outer ring cut-out area is denoted by h1 and 1mm < h1 < 10mm, and a height of the negative electrode outer ring cut-out area is denoted by h2 and 1mm < h2 < 10mm.

In one embodiment, the tab center cut-out area includes a negative electrode center cut-out area located on the negative electrode tab, which has a circular structure. A diameter of the negative electrode center cut-out area is denoted by H3 and 3mm < H3 < 15mm, and a height of the negative electrode center cut-out area is denoted by H4 and 1mm < H4 < 5mm.

In one embodiment, the tab center cut-out area further includes a positive electrode center cut-out area located on the positive electrode tab, which has a circular structure, and a diameter of the positive electrode center cut-out area is denoted by h3 and 3mm < h3 < 15mm, and a height of the positive electrode center cut-out area is denoted by h4 and 1mm < h4 < 5mm.

In one embodiment, the diameter of the coil is D and 30mm < D < 60mm, a height of the coil is denoted by Hand 50mm < H < 100mm, and a diameter of a center hole of the coil is denoted by d and 1mm < d < 3mm.

The application provides a battery with safe and reliable products and high assembly efficiency.

In the second aspect, the embodiment of the application provides a battery, which includes a case and the above-mentioned coil structure.

In one embodiment, the battery also includes a first current collection plate, the first end of the case is an open end, the coil is located in the case, the first current collection plate is arranged on the first end of the coil and is located at the open end, and the tabs of the first end of the case and the coil are both welding connected with the first current collection plate.

In one embodiment, the first current collection plate includes a current collection plate main body and connecting parts, the connecting parts are arranged at intervals along the circumferential direction of the current collection plate main body, the current collection plate main body is connected with the tab of the first end of the coil by welding, and the connecting parts are located in the tab outer ring cut-out area of the tab of the first end of the coil, and are connected with the inner wall of the case by welding.

In one embodiment, the inner side wall of the case has a retraction necking part recessed inward along the radial direction of the battery, and the connecting part and the retraction necking part is welding connected along the axial direction of the battery to the side closed to the coil.

In one embodiment, along the radial direction of the battery, the width of the retraction necking part is denoted by a, and the width of the tab outer ring cut-out area of the tab at the first end of the coil is denoted by b, with a ≤ b.

In one embodiment, the battery also includes a pole, the second end of the case is provided with a mounting hole, and the pole penetrates into the mounting hole and is electrically connected with the tab of the second end of the coil.

In one embodiment, the battery also includes a second current collection plate, which is arranged on the tab of the second end of the coil, and the pole and the tab of the second end of the coil are connected with the second current collection plate by welding.

In an embodiment, the battery also includes an insulating seal sandwiched between the pole and the inner wall of the mounting hole.

Beneficial effects of embodiments of the application:
The coil structure proposed in this application includes a coil, and the coil is provided with a positive electrode tab and a negative electrode tab which are respectively located at the axial ends of the coil. The positive electrode tab and the negative electrode tab both include a tab outer ring cut-out area and a tab center cut-out area formed by cutting, and there is a tab uncut area between the tab outer ring cut-out area and the tab center cut-out area. It can be seen that the cut-out area is formed by cutting off the corresponding part of the tab by the cutting process, so in the axial direction of the coil, the uncut area of the tab protrudes from the cut-out area of the outer ring of the tab and the cut-out area of the center of the tab. After the above-mentioned cut-out area is cut by the cutting process, the problem that the edge of the tab is turned out after rubbing can be improved, and the avoidance space provided by the cutting process can also reduce the risk of tab deformation caused by the extrusion of the coil with the case, and solve the problem that the welding needle or thimble cannot smoothly enter the center hole. In addition, cutting off the outer ring of the negative electrode tab can also reserve a space for the installation of the negative electrode current collection plate, so as to prevent the negative electrode current collection plate from sinking in the process of sealing the battery, resulting in the increase of the core pressing amount, resulting in the internal short circuit of the battery.

The battery provided by the application includes the coil structure. It can ensure the safety and reliability of products and high assembly efficiency.

### Brief Description of the Drawings

FIG. 1 is a structural schematic diagram of a coil structure provided by an embodiment of the present application;
FIG. 2 is a cross-sectional view of the coil structure provided by the embodiment of the present application;
FIG. 3 is a cross-sectional view of a battery provided by an embodiment of the present application.

In the figures:
1: positive electrode tab; 121: tab outer ring cut-out area; 11: positive electrode outer ring cut-out area; 12: positive electrode center cut-out area;
2: negative electrode tab; 122: tab center cut-out area; 21: negative electrode outer ring cut-out area;
22: negative electrode center cut-out area;
123: tab uncut area;
10: coil; 20: case; 201: retraction necking part; 30: the first current collection plate; 31: the second current collection plate; 301: current collection plate main body; 302: connecting part; 400: mounting hole; 40: pole.

### Detailed Description of the invention

In the description of this application, unless otherwise specified and limited, the terms "connected", "link" and "fixed" should be understood broadly, for example, they can be fixed connections, detachable connections or integrated; Can be mechanically connection or electrically connection; It can be directly connected or indirectly connected through an intermediate medium, and it can be the internal communication of two elements or the interaction between two elements. For those of ordinary skill in the art, the meanings of the above terms in this application can be understood according to the situation.

In the present application, unless otherwise specifically specified and defined, the first feature being "on" or "under" the second feature may include direct contact of the first feature and second feature, and may also include a case where the first feature is not directly contacted with the second feature, but is contacted with the second feature through additional features between them. Moreover, the first feature being "on top of', "above" or "on the surface of' the second feature includes that the first feature is right above or obliquely above the second feature, or merely indicates that the first feature level is higher than the second feature. The first feature being "at the bottom of', "below" or "under" the second feature includes a case where the first feature is directly below and obliquely below the second feature, or merely indicates that the first feature level is less than the second feature.

In the description of this embodiment, the directions or positional relationships indicated by the terms "up", "down", "left" and "right" and the like are the orientation or positional relationship based on the drawings. It is only for the convenience of describing the disclosure and simplifying the description. It does not indicate or imply that the device or component referred to must have a specific orientation or must be constructed and operated in a specific orientation. In addition, the terms "first" and "second" are only used to distinguish in description and have no special meanings.

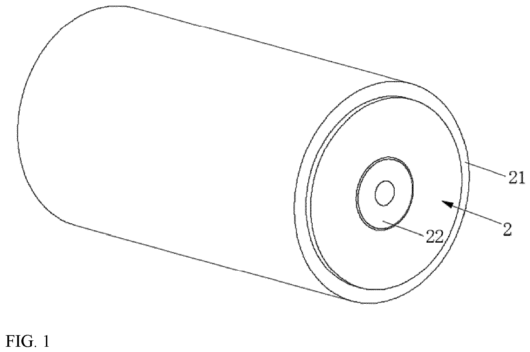

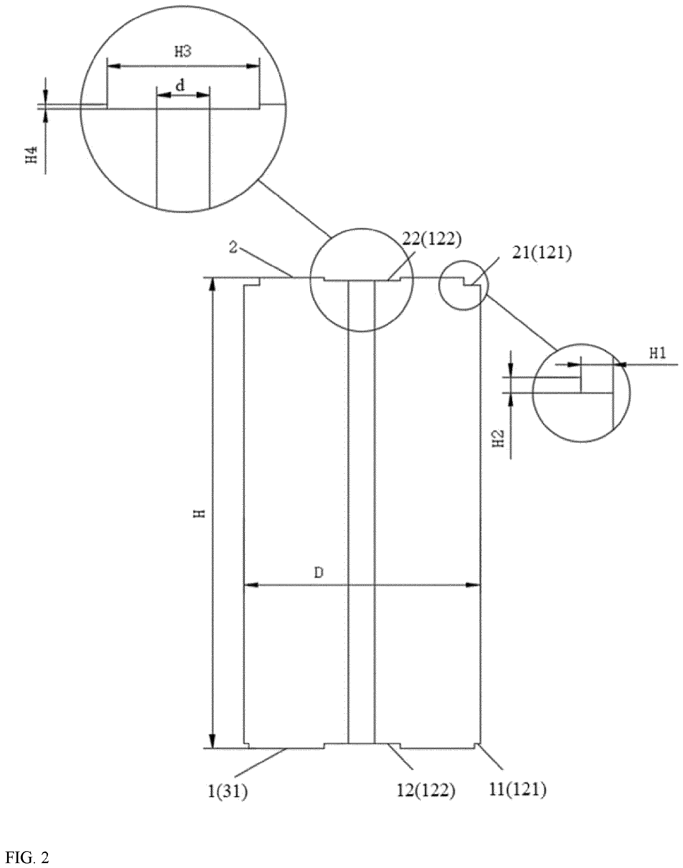

As shown in FIG. 1 and FIG. 2, this embodiment provides a coil structure, including a coil 10. The coil 10 is formed by stacking a positive electrode plate, a separator and a negative electrode plate, and then winding, and has a positive electrode tab 1 and a negative electrode tab 2 located at the axial ends of the coil 10. The positive electrode tab 1 and the negative electrode tab 2 both include a tab outer ring cut-out area 121 and a tab center cut-out area 122 formed by cutting, and a tab uncut area 123 is also arranged between the tab outer ring cut-out area 121 and the tab center cut-out area 122. As can be seen, the cut-out area is formed by cutting off the corresponding part of the tab by the cutting process, so the tab uncut area 123 protrudes from the tab outer ring cut-out area 121 and the tab center cut-out area 122 in the axial direction of the coil 10.

Because the coil 10 is formed by the winding process, the stacked positive electrode plate, separator and negative electrode plate are tightly wound by the winding needle to form a cylindrical shape. After the coil 10 is flattened, the two ends of the coil 10, especially the outer edges, are prone to eversion. Therefore, the outer edges of the positive and negative tabs of the coil 10 are easily contacted with the battery case 20 during the process of entering the case, resulting in the extrusion deformation of the tabs or the short circuit of the battery. In addition, after the coil 10 is flattened, the hole blocking effect is easy to occur at the center hole of the coil 10, which makes the welding needle or thimble unable to smoothly enter the center hole, thus affecting the next welding of the battery. After the above areas are cut off by the cutting process, the problem that the edge of the tab is turned out after rubbing can be improved, and the avoidance space provided by the cutting process can also reduce the risk of tab deformation caused by the extrusion of the coil 10 and the case 20 when entering the case, and solve the problem that the welding needle or thimble cannot smoothly enter the center hole. In addition, cutting off the outer ring of the negative electrode tab 2 can reserve a space for the installation of the negative electrode current collection plate 30, so as to prevent the negative electrode current collection plate 30 from sinking in the process of sealing the battery, resulting in an increase in the core pressing amount, resulting in an internal short circuit of the battery. In this embodiment, the tab part of the coil 10 is cut by laser to form the above structure. Compared with the above structure formed by axial flattening of the coil 10 by a shaping mechanism, it can prevent the tab from being crushed and metal chips from appearing. However, if the chips enter the inside of the coil 10, it is easy to have internal short circuit, which is not conducive to the safe production of batteries.

For example, as shown in FIGS. 1 and 2, the tab outer ring cut-out area 121 includes a negative electrode outer ring cut-out area 21 located on the negative electrode tab 2, which has an annular structure, with a width of H1 and a width of 1mm < H1 < 10mm, a height of H2 and a width of 1mm < H2 < 10mm. The electrode outer ring cut-out area 121 also includes a positive electrode outer ring cut-out area 11 on the positive electrode tab 1, which has an annular structure. The width of the positive electrode outer ring cut-out area 11 is h1 and 1mm < h1 < 10mm, and the height is h2 and 1mm < h2 < 10mm. The widths of the negative outer ring cut-out area 21 and the positive outer ring cut-out area 11 may be different, and the heights of the negative outer ring cut-out area 21 and the positive outer ring cut-out area 11 may also be different. In this embodiment, the height of the negative outer ring cut-out area 21 is larger than the width of the positive outer ring cut-out area 11, which is determined by the structure of the battery, because the negative outer ring cut-out area 21 not only facilitates the insertion of the coil 10, but also needs to reserve a space for the installation of the negative current collection plate 30, while the positive outer ring cut-out area 11 is only used to avoid the case 20.

In addition, the tab center cut-out area 122 includes a negative electrode center cut-out area 22 located on the negative electrode tab 2. The negative electrode center cut-out area 22 has a circular structure. The diameter of the negative electrode center cut-out area 22 is H3 and 3mm < H3 < 15mm, and the height is H4 and 1mm < H4 < 5mm. The tab center cut-out area 122 also includes a positive electrode center cut-out area 12 located on the positive electrode tab 1. The positive electrode center cut-out area 12 has a circular structure, and the diameter of the positive electrode center cut-out area 12 is h3 and 3mm < h3 < 15mm, and the height is h4 and 1mm < h4 < 5mm. Wherein, the diameters of the negative electrode center cut-out area 22 and the positive electrode center cut-out area 12 may be different, and the heights of the negative electrode center cut-out area 22 and the positive electrode center cut-out area 12 may also be different. In this embodiment, the height of the positive center cut-out area 12 is larger than that of the negative center cut-out area 22, which is determined by the structure of the battery, because the positive center cut-out area 12 not only facilitates the welding needle or thimble to enter the center hole, but also needs to reserve a space for the installation of the pole 40, while the negative center cut-out area 22 is only used to avoid the welding needle or thimble.

Optionally, in this embodiment, the diameter of the coil 10 is D and 30mm < D < 60mm, the height of the core 10 is H and 50mm < H < 100mm, and the diameter of the center hole of the core 10 is d and 1mm < d < 3mm.

This embodiment also provides a battery, including the case 20 and the above-mentioned coil structure, which can effectively avoid the extrusion between the coil 10 and the case 20, ensure the safety of battery products, facilitate the assembly between the coil 10 and other components, and effectively improve the assembly efficiency.

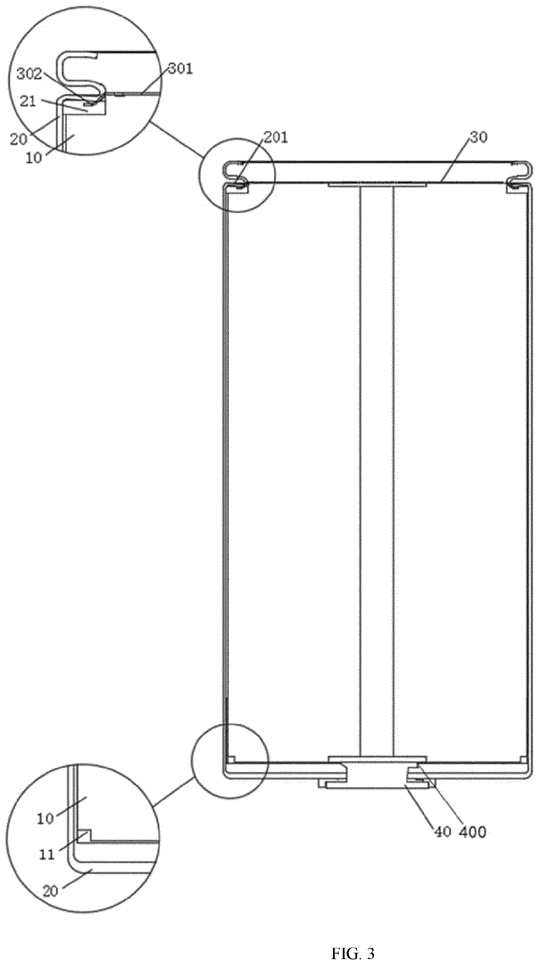

As shown in FIG. 3, the battery further includes a first current collection plate 30, the first end of the case 20 is an open end, and the coil 10 penetrates into the case 20 from the open end, while the first current collection plate 30 is arranged on the first end of the coil 10 and located at the open end, and the tabs of the first end of the case 20 and the coil 10 are both welded connected with the first current collection plate 30.

Optionally, the first current collection plate 30 includes a current collection plate main body 301 and connecting parts 302, the connecting parts 302 are arranged at intervals along the circumferential direction of the current collection plate main body 301. The collector plate main body 301 is welded with the tab of the first end of the coil 10, and the connecting parts 302 are located in the tab outer ring cut-out area 121 of the tab of the first end of the coil 10, and welded connect with the inner wall of the case 20. The side of the first current collection plate 30 facing away from the coil 10 is also provided with a cover plate, and after the case 20 is sealed with the cover plate through a rolling groove, the case 20 will exert a force towards the coil 10 on the connecting part 302, and the cut-out area 121 of the outer ring of the tab can provide an avoidance space for the connecting part 302, so as to prevent the first current collection plate 30 from sinking during the sealing process, resulting in the increase of the core pressing amount, and avoid the short circuit in the battery.

Optionally, the retraction necking part 201 recessed inward along the radial direction of the battery will be formed on the inner side wall of the case 20 through the above rolling groove process, and the welded connection between the connecting part 302 and the case 20, is the welding connection between the connecting part 302 and the retraction necking part 201 to the side close to the coil 10 along the axial direction of the battery.

Optionally, along the radial direction of the battery, the width of the retraction necking part 201 recessed inward is a, and the width of the tab outer ring cut-out area 121 of the tab of the first end of the coil 10 is b, with a ≤ b. In this embodiment, the first current collection plate 30 is the negative current collection plate, and the first current collection plate 30 is arranged on the negative electrode tab 2 of the coil 10, so the tab outer ring cut-out area 121 of the tab at the first end of the coil 10 is the negative electrode outer ring cut-out area 21, that is, a≤H1.

Optionally, the battery also includes a pole 40, the second end of the housing 20 has a mounting hole 400, and the pole 40 penetrates into the mounting hole 400 and is electrically connected with the tab of the second end of the coil 10.

Optionally, the battery also includes a second current collection plate 31, which is arranged on the tab of the second end of the coil 10, and the pole 40 and the tab of the second end of the coil 10 are welding connected with the second current collection plate 31.

In this embodiment, the second current collection plate 31 is the positive current collection plate, and the second current collection plate 31 is arranged on the positive electrode tab 1 of the coil 10. During welding connection, the coil 10 with the positive current collection plate is put into the case 20 from the open end of the case 20, and the pole 40 is inserted into the mounting hole 400 from the second end of the case 20, and a tool is used to pass through it. In this embodiment, the arrangement of the center cut-out area 122 of the tab of the coil 10 can prevent the center hole of the coil 10 from being blocked, thus preventing the tool from passing through the center hole of the coil 10 and affecting the assembly efficiency of the battery.

Optionally, the battery further includes an insulating seal sandwiched between the pole 40 and the inner wall of the mounting hole 400. In this embodiment, the pole 40 is the positive output pole of the battery, while the case 20 is the negative output pole of the battery. The pole 40 penetrates through the mounting hole 400 of the case 20 and needs to be separated from the case 20 by an insulating seal to ensure that the two are always insulated and avoid short circuit of the battery. However, in this embodiment, setting the positive outer ring cut-out area 11 at the positive electrode tab 1 can prevent the positive electrode tab 1 from contacting the case 20 and reduce the risk of short circuit.

## Claims

1. A coil structure, comprising a coil (10), the coil (10) having a positive electrode tab (1) and a negative electrode tab (2), the positive electrode tab (1) and the negative electrode tab (2) both include a tab outer ring cut-out area (121) and a tab center cut-out area (122) formed by cutting, a tab uncut area (123) is disposed between the tab outer ring cut-out area (121) and the tab center cut-out area (122), and along the axial direction of the coil (10), the tab uncut area (123) protrudes from the tab outer ring cut-out area (121) and the tab center cut-out area (122).

2. The coil structure according to claim 1, wherein the tab outer ring cut-out area (121) comprises a negative electrode outer ring cut-out area (21) located on the negative electrode tab (2), the negative electrode outer ring cut-out area has an annular structure, and a width of the negative electrode outer ring cut-out area (21) is denoted by H1 and 1mm < H1 < 10mm, and a height of the negative electrode outer ring cut-out area is denoted by H2 and 1mm < H2 < 10mm.

3. The coil structure according to claim 1, wherein the tab outer ring cut-out area (121) further comprises a positive electrode outer ring cut-out area (11) located on the positive tab (1), the positive electrode outer ring cut-out area (11) has an annular structure, and a width of the positive electrode outer ring cut-out area (11) is denoted by h1 and 1mm < h1 < 10mm, a height of the positive electrode outer ring cut-out area is denoted by h2 and 1mm < h2 < 10mm.

4. The coil structure according to claim 1, wherein the tab center cut-out area (122) comprises a negative electrode center cut-out area (22) located on the negative electrode tab (2), and the negative electrode center cut-out area (22) has a circular structure, and a diameter of the negative electrode center cut-out area (22) is denoted by H3 and 3mm < H3 < 15mm, a height of the negative electrode center cut-out area is denoted by H4 and 1mm < H4 < 5mm.

5. The coil structure according to claim 1, wherein the tab center cut-out area (122) further includes a positive electrode center cut-out area (12) located on the positive electrode tab (1), the positive electrode center cut-out area (12) has a circular structure, and a diameter of the positive electrode center cut-out area (12) is denoted by h3 and 3mm < h3 < 15mm, and a height of the positive electrode center cut-out area is denoted by h4 and 1mm < h4 < 5mm

6. The coil structure according to any one of claim 1-5, wherein a diameter of the coil (10) is denoted by D and 30mm < D < 60mm, a height of the coil (10) is denoted by Hand 50mm < H < 100mm, and a diameter of a center hole of the coil (10) is denoted by d and 1mm < d < 3mm.

7. A battery, including a case (20) and the coil structure as claimed in any one of claims 1 to 6.

8. The battery according to claim 7, also comprising a first current collection plate (30), wherein a first end of the case (20) is an open end, and the coil (10) is located inside the case (20); the first current collection plate (30) is arranged on the first end of the coil (10) at the open end; and a plurality of tabs of the first end of the case (20) and the coil (10) are both connected with the first current collection plate (30) by welding.

9. The battery according to claim 8, wherein the first current collection plate (30) comprises a current collection plate main body (301) and a connecting part (302), the connecting part (302) is arranged at intervals along the circumferential direction of the current collection plate main body (301), and the current collection plate main body (301) is connected with the tab of the first end of the coil by welding, and the connecting parts (302) are located in the tab outer ring cut-out area of the tab of the first end of the coil (10), and are connected with an inner wall of the case (20) by welding.

10. The battery according to claim 9, wherein the inner side wall of the case (20) is provided with a retraction necking part (201) recessed inward along the radial direction of the battery, and the connecting part (302) and the retraction necking part (201) are connected along the axial direction of the battery to the side closed to the coil (10) by welding.

11. The battery according to claim 10, wherein along a radial direction of the battery, a width of the retraction necking part (201) is denoted by a, and a width of the tab outer ring cut-out area of the tab at the first end of the coil (10) is denoted by b, and a ≤ b.

12. The battery according to claim 8, further comprising a pole (40), a second end of the casing (20) having a mounting hole (400), and the pole (40) penetrates into the mounting hole (400) and is electrically connected with the tab of the second end of the coil (10).

13. The battery according to claim 12, also comprising a second current collection plate (31), the second current collection plate is arranged on the tab of the second end of the coil (10), and the pole (40) and the tab of the second end of the coil are connected to the second current collection plate (31) by welding.

14. The battery according to claim 12, also comprising an insulating seal sandwiched between the pole (40) and the inner wall of the mounting hole (400).
